# EUROPÄISCHE PATENTSCHRIFT

(11) **EP 1 293 027 B1**
(45) Veröffentlichungstag und Bekanntmachung des Hinweises auf die Patenterteilung: **30.07.2008**
(21) Anmeldenummer: 01956500.1
(22) Anmeldetag: 22.06.2001
(51) Int. Cl.: H02K 11/00, H02K 5/173

(54) **ELEKTROMOTOR UND ANTRIEBSACHSE MIT EINEM EINGEBAUTEN ELEKTROMOTOR**
ELECTROMOTOR AND DRIVING AXLE WITH A BUILT-IN ELECTROMOTOR
MOTEUR ELECTRIQUE ET ARBRE DE COMMANDE A MOTEUR ELECTRIQUE INTEGRE

(30) Priorität: 23.06.2000 DE 20011138 U
(43) Veröffentlichungstag der Anmeldung: 19.03.2003
(73) Patentinhaber: Jungheinrich Moosburg GmbH, 85368 Moosburg (DE)
(72) Erfinder: ZENS, Robert, 85368 Moosburg (DE)
(74) Vertreter: Tiesmeyer, Johannes
(86) Internationale Anmeldenummer: PCT/EP2001/007105
(87) Internationale Veröffentlichungsnummer: WO 2001/099258

(56) Entgegenhaltungen:
- EP-A- 0 610 767
- DE-C- 4 142 707
- PATENT ABSTRACTS OF JAPAN vol. 1995, no. 07, 31. August 1995 (1995-08-31) -& JP 07 107695 A (MATSUSHITA ELECTRIC IND CO LTD), 21. April 1995 (1995-04-21)
- PATENT ABSTRACTS OF JAPAN vol. 1997, no. 07, 31. Juli 1997 (1997-07-31) -& JP 09 065617 A (TAMAGAWA SEIKI CO LTD), 7. März 1997 (1997-03-07)
- PATENT ABSTRACTS OF JAPAN vol. 1996, no. 04, 30. April 1996 (1996-04-30) -& JP 07 336923 A (MATSUSHITA ELECTRIC IND CO LTD), 22. Dezember 1995 (1995-12-22)
- PATENT ABSTRACTS OF JAPAN vol. 1995, no. 02, 31. März 1995 (1995-03-31) & JP 06 327195 A (MATSUSHITA ELECTRIC IND CO LTD), 25. November 1994 (1994-11-25)

## Beschreibung

Die Erfindung betrifft einen Elektromotor, insbesondere Drehstrom-Elektromotor, mit einem Gehäuse aus ferromagnetischem Material, insbesondere Stahl, und mit einer rotierend anzutreibenden Welle in dem Gehäuse, wobei das Gehäuse wenigstens ein Lagerschild mit einem Lager zur Lagerung der Welle umfasst und wobei das Lager Sensormittel zur Erfassung des Drehzustandes der Welle aufweist.

Die Erfindung bezieht sich insbesondere auf einen bürstenlosen Drehstrom-Asynchron-Elektromotor der vorstehend genannten Art, welcher in einer Antriebsachse eines Fahrzeugs, insbesondere Flurförderzeugs, eingebaut ist, um Antriebsräder der Antriebsachse anzutreiben.

Antriebsachsen der hier betrachteten Art mit einem eingebauten Drehstrom-Elektromotor sind beispielsweise aus der DE 198 40 006 A1 und aus der DE 298 19 114 U1 bekannt. Das Achsgehäuse ist gleichzeitig als Motorgehäuse ausgebildet, wobei der Stator des Motors in dem Achsgehäuse fixiert ist und der Rotor des Motors von einer Hohlwelle axial durchsetzt ist, welche von dem Elektromotor rotierend angetrieben wird. Die Hohlwelle ist die Eingangswelle eines in dem Achsgehäuse untergebrachten Differentialgetriebes, dessen Abtriebswellen der Antriebsachse auf beiden Seiten zugeordnete Räder antreiben.

Zur Steuerung und Regelung des Elektromotors nach Maßgabe der gewünschten Fahrzeuggeschwindigkeit, Fahrzeugbeschleunigung, Fahrtrichtung usw. wird mittels eines Drehwinkelgebers der Ist-Drehzustand einer Welle im Antriebsstrang, beispielsweise der Hohlwelle, erfasst. Es wurde vorgeschlagen, hierzu ein Sensorlager zu verwenden, bei dem es sich um ein Wälzlager mit wenigstens einem integrierten Drehwinkel-Inkrementalgeber handelt. Solche Sensorlager sind im Handel erhältlich und beispielsweise in EP 0838 683, EP 0992 797 oder EP 0875 683 beschrieben. Versuche mit einem unmittelbar in der Lageraufnahmeöffnung des Lagerschildes eines Gehäuses eines Elektromotors angeordneten, die Motorwelle lagernden Sensorlager haben ergeben, dass die Ausgangssignale der Drehwinkelgeber häufig stark gestört waren, so dass eine zuverlässige Istwert-Erfassung des Drehzustandes der Motorwelle nicht gewährleistet werden konnte. Insbesondere bei einem integrierten Antriebsmotor einer Fahrzeug-Antriebsachse ist jedoch die zuverlässige Erfassung des Drehzustandes einer Antriebswelle wichtig, damit eine zuverlässige Antriebssteuerung realisiert werden kann.

Die DE-C1- 41 42 707 offenbart einen Elektromotor entsprechend dem Oberbegriff des Anspruchs 1, wobei ein Abschirmelement um den Hallsensor angeordnet ist.

Der Erfindung liegt somit die Aufgabe zugrunde, einen Elektromotor der eingangs genannten Art, und insbesondere eine mit einem solchen Elektromotor ausgestattete Antriebsachse bereitzustellen, wobei eine zuverlässige Drehzustandserfassung der Welle mittels eines in dem Lagerschild eingesetzten Sensorlagers möglich ist.

Zur Lösung dieser Aufgabe wird erfindungsgemäß vorgeschlagen, dass das Lager in einer fixiert in der Lageraufnahmeöffnung des Lagerschildes angeordneten Abschirmbuchse aus einem nicht ferromagnetischen Material aufgenommen ist und dass eine mit dem Lagerschild verbundene oder als integraler Teil des Lagerschilds ausgebildete, die Welle umgebende Abdeckbuchse aus ferromagnetischem Material vorgesehen ist, welche gehäuseinnenseitig das Lager und die Abschirmbuchse umgibt. Des Weiteren wird zur Lösung der Aufgabe vorgeschlagen, dass der Elektromotor als integriertes Antriebsaggregat einer Antriebsachse eines Fahrzeugs, insbesondere Flurförderfahrzeugs, ausgebildet ist und dass das Gehäuse zumindest einen Teil des Achsgehäuses der Antriebsachse bildet.

Die Erfindung geht von der Überlegung aus, dass die oben genannten Signalstörungen eines unmittelbar in dem Stahl-Lagerschild des Motorgehäuses eingesetzten Sensorlagers auf den Streufluss des vom Elektromotor erzeugten Magnetfeldes zurückzuführen sein könnten, wobei der Streufluss die Sensorelektronik beeinflusst. Insbesondere Winkelgeber mit Hall-Sensoren reagieren auf den über die Gehäusewände und das Lagerschild geführten magnetischen Streufluss des Motors in der Weise empfindlich, dass das Messsignal so stark von Störungen überlagert ist, dass es für Steuerungszwecke nicht auswertbar ist.

Bei dem Elektromotor der vorliegenden Erfindung bietet die Abschirmbuchse einen erhöhten magnetischen Widerstand, wohingegen die Abdeckbuchse eine "Kanalisierung" des vom Motorgehäusemantel über das Lagerschild zur Welle und somit zum Innern des Motors hingeführten magnetischen Flusses bewirkt. Der magnetische Streufluss wird somit im Wesentlichen unter Umgehung des Sensorlagers und der daran vorgesehenen elektronischen Komponenten vom Gehäusemantel über das Lagerschild und die Abdeckbuchse zur Welle geführt.

Die nicht ferromagnetische Abschirmbuchse sollte aus einem mechanisch stabilen Material, vorzugsweise Metall wie Bronze oder Messing, bestehen. Denkbar wäre auch eine Abschirmbuchse aus austenitischem Stahl, Aluminium oder Keramik.

Zur effizienten Führung des magnetischen Flusses unter Umgehung des Sensorlagers sollte die von der Welle durchsetzte Wellendurchgangsöffnung der Abdeckbuchse eine Umfangsfläche aufweisen, deren radialer Abstand zur Welle sehr klein ist. Der diesem radialen Abstand entsprechende Luftspalt zwischen Abdeckbuchse und Welle sollte möglichst nicht wesentlich breiter als 0,5 mm sein.

Als weitere Maßnahme zur effizienten Führung des magnetischen Streuflusses unter Umgehung des Sensorlagers ist vorgesehen, dass die Abdeckbuchse einen sich in axialer Richtung der Welle erstreckenden, mit der Welle einen möglichst kleinen Luftspalt begrenzenden Bund aufweist. Dieser Bund bietet eine vergrößerte Fläche für den Übergang des magnetischen Flusses vom Abdeckschild zur Welle.

Mit den vorstehend genannten Maßnahmen wird erreicht, dass ein kommerziell erhältliches Sensorlager verwendet werden kann, um die Motorwelle zu lagern und ferner den Drehzustand der Motorwelle bei dem Elektromotor zuverlässig und nahezu störungsfrei zu erfassen. Dies hat insbesondere Bedeutung bei einer Antriebsachse mit einem solchen Elektromotor als integriertes Antriebsaggregat, bei der es auf eine zuverlässige Istwert-Erfassung des Antriebszustands über die Erfassung des Drehzustands der vom Motor angetriebenen Welle ankommt.

Die Erfindung wird nachstehend unter Bezugnahme auf die Figuren näher erläutert.
- Figur 1: zeigt in einer stark schematisierten Draufsicht eine teilweise im Schnitt und teilweise aufgebrochen dargestellte Antriebs-Achseinheit mit einem Sensorlager ohne die erfindungsgemäß vorgeschlagenen Maßnahmen.
- Figur 2: zeigt den in Fig. 1 aufgebrochen dargestellten Bereich des Achsgehäuses/Motorgehäuses in vergrößerter Darstellung, wobei in Fig. 2 eine Abschirmbuchse und eine Abdeckbuchse entsprechend den erfindungsgemäß vorgeschlagenen Maßnahmen eingezeichnet sind.

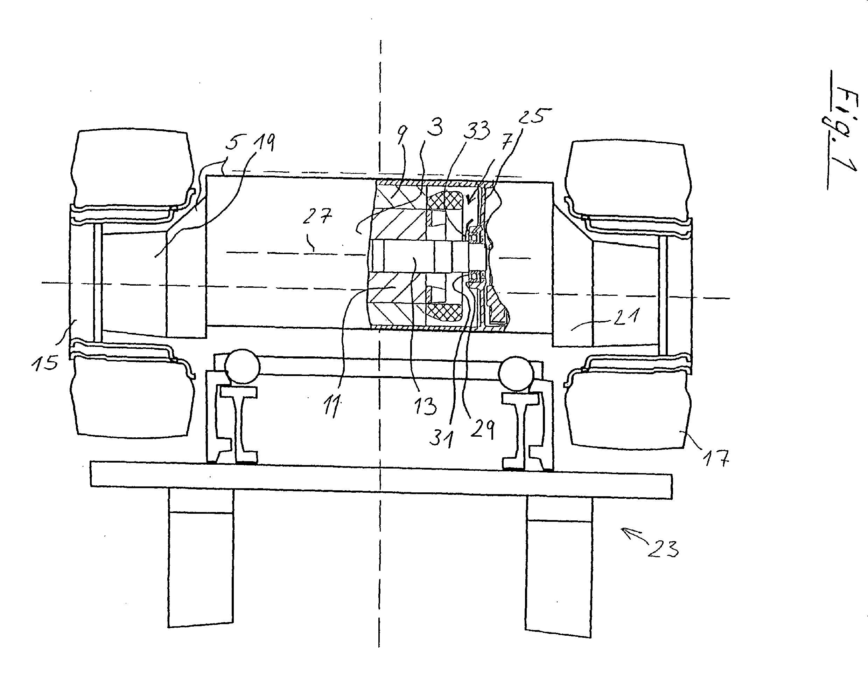

Figur 1 zeigt eine Antriebsachse mit eingebautem bürstenlosem Drehstrom-Elektromotor für den Fahrantrieb eines Hubstaplers. Eine solche Antriebsachse ist detaillierter z. B. in der DE 198 40 006 A1 beschrieben, auf die verwiesen wird.

In Fig. 1 ist ein mittlerer Abschnitt 3 des Achsgehäuses 5 teils aufgebrochen dargestellt, so dass Elemente des integrierten Elektromotors 7 erkennbar sind. Der fixiert in dem Gehäuse 5 aufgenommene Stator 9 steht mit der äußeren Umfangswand (dem Mantel) des näherungsweise zylindrischen Gehäusemittelteils 3 in Verbindung. Der in dem Stator 9 drehbar aufgenommene Rotor 11 des Drehstrom-Elektromotors ist von einer Hohlwelle 13 durchsetzt, die von dem Elektromotor 7 angetrieben wird und als Eingangswelle für ein (in den Figuren nicht gezeigtes) Differentialgetriebe dient, dessen Abtriebswellen über ein jeweiliges Stirnradsatz-Getriebe die Antriebsräder 15, 17 antreiben, die in Fig. 1 in einer schematischen Schnittdarstellung angedeutet sind. Die in Fig. 1 in Draufsicht gezeigte Achse weist einen sogenannten Portalversatz des Gehäusemittelteils 3 gegenüber den Außenteilen 19, 21 auf. Hierdurch ergeben sich günstigere Platzverhältnisse, insbesondere für die Unterbringung des Hubmastes/Hubgerüstes 23 des Hubstaplers. Das Achsgehäuse 5 ist tragendes Bauteil der Antriebsachse und muss aus diesem Grund mechanisch stabil dimensioniert sein. Im Beispielsfall bestehen sowohl der Mantelteil 3 des Achsgehäuses 5 als auch das Lagerschild 25, welches eine quer zur Achse 27 der Motorwelle 13 verlaufende Zwischenwand des Achsgehäuses 5 bildet und mit dem Gehäusemittelteil 3 unmittelbar verbunden ist, aus Stahl. In der Lageraufnahmeöffnung 29 des Lagerschildes 25 ist gemäß Fig. 1 ein Wälzlager 31, beispielsweise Kugellager, eingesetzt, welches die Motor-Hohlwelle 13 an ihrem dem Differentialgetriebe entfernten Ende drehbar lagert. Das Wälzlager 31 ist ein Sensorlager, das Winkelgeber-Sensoren 33 aufweist, von denen einer erkennbar ist. Mittels des Sensorlagers 31, 33 kann somit der Drehzustand der Motor-Hohlwelle 13 erfasst werden. Das Sensorlager 31, 33 umfasst vorzugsweise wenigstens zwei Hall-Sensoren 33, die am Umfang des Lagers 31 mit Winkelabstand voneinander angeordnet sind, so dass sie phasenversetzte Signale liefern können, was für die Drehrichtungserkennung von Bedeutung ist. Die von den Sensoren 33 gelieferten Signale werden als Istwert-Signale von einer (nicht gezeigten) Steuereinheit zur Steuerung des Antriebs der Räder 15, 17 ausgewertet. Die Steuereinheit kann damit die Drehgeschwindigkeit, Drehbeschleunigung, Drehwinkeländerung und die Drehrichtung der Welle bestimmen. Bei einer Antriebsachse gemäß Fig. 1 mit einem unmittelbar mit dem Stahl-Material des Lagerschildes 25 in Kontakt stehenden Sensorlager 31, 33 waren die von den Drehwinkelgeber-Sensoren 33 gelieferten Signale häufig stark gestört, so dass eine zuverlässige Antriebssteuerung nicht immer gegeben war. Es hat sich herausgestellt, dass wesentliche Ursache dieser Störungen der vom Elektromotor erzeugte und über die Gehäusemantelwand sowie über das Lagerschild 25 und über das darin eingesetzte Sensorlager 31, 33 zur Welle 13 geführte Magnetfluss ist, der die elektronischen Komponenten des Sensorlagers 31, 33 beeinflusst.

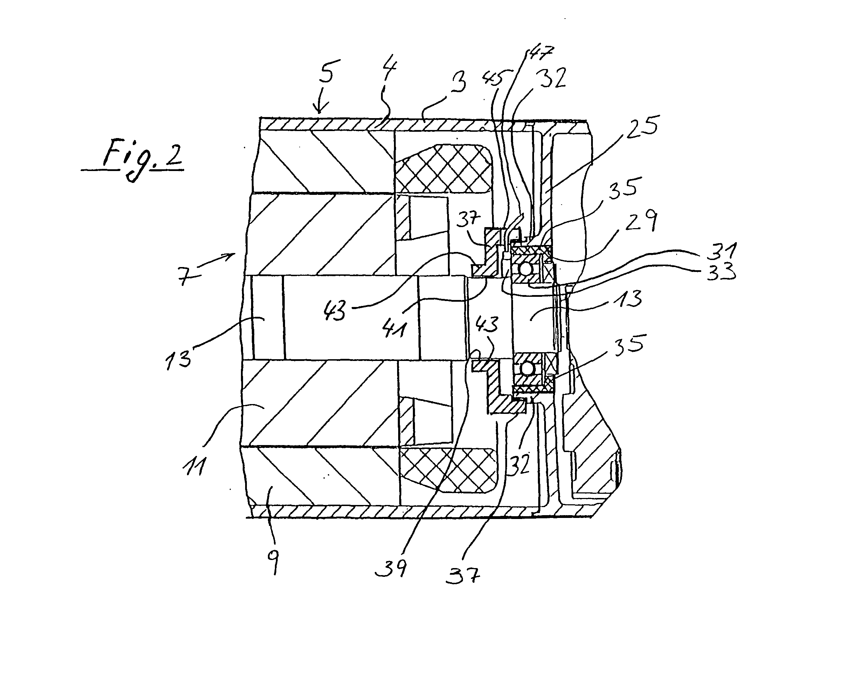

Figur 2 zeigt den durch Aufbruch des mittleren Achsgehäuseteils 3 in Fig. 1 erkennbaren inneren Bereich der Antriebsachse mit betreffenden Motorkomponenten in vergrößerter Darstellung, wobei Fig. 2 jedoch gegenüber Fig. 1 dadurch abgewandelt ist, dass erfindungsgemäße Maßnahmen zur Unterdrückung der o. g. Störungen der Drehwinkelsensorsignale dargestellt sind. Zu diesen Maßnahmen zählt die Unterbringung des Wälzlagers 31 in einer Abschirmbuchse 35 aus einem nicht ferromagnetischen Material, beispielsweise Messing oder Bronze. Die Abschirmbuchse ist in der Lageraufnahmeöffnung 29 des Lagerschildes 25 fixiert aufgenommen, wobei sich die Abschirmbuchse 35 vorzugsweise über die gesamte axiale Länge des Lagerschildes 25 und des Lagers 31 und ggf. darüber hinaus erstreckt. Im Beispielsfall weist das Lagerschild 25 einen die Lageraufnahmeöffnung 29 enthaltenden Bund 32 auf. Radial außen auf diesem Bund 32 ist eine Abdeckbuchse 37 aufgesetzt, die aus ferromagnetischem Material, vorzugsweise Stahl, besteht und unmittelbar mit dem Lagerschild 25 in Verbindung steht. Die Abdeckbuchse 37 bedeckt gehäuseinnenseitig, also an der dem Rotor 11 zugewandten Seite des Lagerschildes 25 das Sensorlager 31, 33 und die Abschirmbuchse 35. Der radial innen liegende Umfang 39 der Abdeckbuchse 37 begrenzt mit der Welle 13 einen schmalen Luftspalt 41 von z.B. 0,5 mm Spaltbreite. Damit die radial innen liegende Umfangsfläche 39 möglichst groß ist, weist die Abdeckbuchse 37 einen radial innen liegenden Bund 43 auf, der sich in axialer Richtung zum Rotor 11 hin erstreckt.

Die Abdeckbuchse 37 dient zum Schließen eines magnetischen Kreises, der das Sensorlager 31, 33 umgeht, wobei der magnetische Streufluss von der Gehäusemantelwand 4 über das Lagerschild 25 und dann über die Abdeckbuchse 37 zur Welle 13 geführt wird. Die Abschirmbuchse 35 bildet einen großen magnetischen Widerstand und dient somit der Abschirmung des Sensorlagers 31, 33.

Es hat sich gezeigt, dass in einer Anordnung gemäß Fig. 2 eine wirksame Unterdrückung von Störungen der Drehwinkelgebersensoren 33 erzielt wird.

Wie in Fig. 2 erkennbar, kann die Abdeckbuchse 37 Kabeldurchtrittsöffnungen 45 für Sensorkabel 47 aufweisen, welche mit der (nicht gezeigten) Motorsteuereinheit verbunden sind.

Es sei darauf hingewiesen, dass die Abschirmbuchse 35 oder/und die Abdeckbuchse 37 aus mehreren Teilen zusammengesetzte Elemente sein können.

Andererseits kann die Abdeckbuchse 37 auch zusammenhängend einstückig mit dem Lagerschild 25 ausgebildet und somit integraler Teil des Lagerschildes 25 sein.

Der Lagerschild kann zusätzlich zur Lageraufnahmeöffnung 29 weitere Öffnungen, beispielsweise zur Kühlung des Motors, aufweisen.

## Patentansprüche

1. Elektromotor, insbesondere Drehstrom-Elektromotor, mit einem Gehäuse (5) aus ferromagnetischem Material, insbesondere Stahl, und mit einer rotierend anzutreibenden Welle (13) in dem Gehäuse (5), wobei das Gehäuse wenigstens ein Lagerschild (25) mit einem Lager (31) zur Lagerung der Welle (13) umfasst und wobei das Lager (31) Sensormittel (33) zur Erfassung des Drehzustandes der Welle (13) aufweist,
**dadurch gekennzeichnet,**
**dass** das Lager (31) in einer fixiert in der Lageraufnahmeöffnung (29) des Lagerschildes (25) angeordneten Abschirmbuchse (35) aus einem nicht ferromagnetischem Material aufgenommen ist und dass eine mit dem Lagerschild (25) verbundene oder als integraler Teil des Lagerschilds (25) ausgebildete, die Welle (13) umgebende Abdeckbuchse (37) aus ferromagnetischem Material vorgesehen ist, welche gehäuseinnenseitig das Lager (31) und die Abschirmbuchse (35) umgibt.

2. Elektromotor nach Anspruch 1, **dadurch gekennzeichnet, dass** die Abschirmbuchse (35) aus Bronze oder/und Messing besteht.

3. Elektromotor nach Anspruch 1 oder 2, **dadurch gekennzeichnet, dass** die von der Welle (13) durchsetzte Wellendurchgangsöffnung der Abdeckbuchse (37) eine Umfangsfläche aufweist, deren radialer Abstand zur Welle (13) kleiner als 2,5 mm, insbesondere als 1 mm ist.

4. Elektromotor nach einem der Ansprüche 1 bis 3, **dadurch gekennzeichnet, dass** die Abdeckbuchse (37) einen sich in axialer Richtung der Welle (13) erstreckenden, die Welle (13) mit geringem radialem Abstand umgebenden Bund (43) aufweist.

5. Elektromotor nach einem der Ansprüche 1 bis 4, **dadurch gekennzeichnet, dass** er als integriertes Antriebsaggregat einer Antriebsachse eines Fahrzeugs, insbesondere Flurförderzeugs, ausgebildet ist und dass das Gehäuse (5) zumindest einen Teil des Achsgehäuses der Antriebsachse bildet.

6. Antriebsachse mit eingebautem Elektromotor nach einem der vorhergehenden Ansprüche.

## Claims

1. Electric motor, in particular a three-phase electric motor, with a housing (5) made of ferromagnetic material, in particular steel, and with a shaft (13) which can be driven in a rotating manner in the housing (5), wherein the housing comprises at least one bearing shield (25) with a bearing (31) for supporting the shaft (13), and wherein the bearing (31) has sensor means (33) for detecting the rotational state of the shaft (13), **characterised in that** the bearing (31) is mounted in a shielding bush (35) made of non-ferromagnetic material which is fixed in the bearing mounting opening (29) of the bearing shield (25), and **in that** a covering bush (37) made of ferromagnetic material is provided which is connected to the bearing shield (25) or designed as an integral part of the bearing shield (25) and surrounds the shaft (13), which covering bush on the inside of the housing surrounds the bearing (31) and the shielding bush (35).

2. Electric motor according to claim 1, **characterised in that** the shielding bush (35) is made of bronze and/or brass.

3. Electric motor according to claim 1 or 2, **characterised in that** the shaft aperture opening of the covering bush (37) through which the shaft (13) passes has a circumferential surface, the radial distance from the shaft (13) of which is less than 2.5 mm, in particular less than 1 mm.

4. Electric motor according to one of claims 1 to 3, **characterised in that** the covering bush (37) has a collar (43) which extends in axial direction of the shaft (13) and surrounds the shaft (13) with a small radial gap.

5. Electric motor according to one of claims 1 to 4, **characterised in that** it is designed as an integrated drive unit of a drive shaft for a vehicle, in particular a guided vehicle system, and **in that** the housing (5) forms at least part of the shaft housing of the drive shaft.

6. Drive shaft with a built-in electric motor according to one of the preceding claims.

## Revendications

1. Moteur électrique, en particulier moteur électrique triphasé, comportant un carter (5) constitué de matériau ferromagnétique, en particulier d'acier, et comportant un arbre à entraînement rotatif (13) dans le carter (5), dans lequel le carter comprend au moins une flasque (25) avec un palier (31) destiné au logement de l'arbre (13) et dans lequel le palier (31) présente des moyens détecteurs (33) destinés à l'acquisition de l'état de rotation de l'arbre (13),
**caractérisé en ce que**
le palier (31) est logé dans une douille de blindage (35) agencée fixée dans l'orifice de logement du palier (29) de la flasque (25) et constituée d'un matériau non ferromagnétique et **en ce qu'**une douille de recouvrement (37) reliée à la flasque (25) ou faisant partie intégrante de la flasque (25), entourant l'arbre (13) et constituée de matériau ferromagnétique est prévue, laquelle entoure le palier (31) et la douille de blindage (35) du côté interne du carter.

2. Moteur électrique selon la revendication 1, **caractérisé en ce que** la douille de blindage (35) est constituée de bronze ou/et de laiton.

3. Moteur électrique selon la revendication 1 ou 2, **caractérisé en ce que** le trou de passage d'arbre de la douille de recouvrement (37), qui est traversé par l'arbre (13), présente une face périphérique dont l'écartement radial par rapport à l'arbre (13) est inférieur à 2,5 mm, en particulier à 1 mm.

4. Moteur électrique selon l'une quelconque des revendications 1 à 3, **caractérisé en ce que** la douille de recouvrement (37) présente un épaulement (43) s'étendant dans le sens axial de l'arbre (13) et entourant l'arbre (13) avec un écartement radial réduit.

5. Moteur électrique selon l'une quelconque des revendications 1 à 4, **caractérisé en ce qu'**il est conçu sous forme de groupe d'entraînement intégré d'un axe d'entraînement d'un véhicule, en particulier d'un chariot de manutention, et **en ce que** le carter (5) forme pour le moins une partie du carter d'arbre de l'arbre de commande.

6. Arbre de commande avec moteur électrique intégré selon l'une quelconque des revendications précédentes.
